# EUROPEAN PATENT APPLICATION

(11) **EP 4 360 466 A1**
(43) Date of publication of application: **01.05.2024**
(21) Application number: 22828413.9
(22) Date of filing: 21.06.2022
(51) Int. Cl.: A23K 50/80, A23K 10/20, A23K 20/153, A23K 20/158

(54) **FEED FOR AQUATIC ANIMALS**

(30) Priority: 21.06.2021 JP 2021102521
(71) Applicant: Sumitomo Chemical Company Limited, Tokyo 103-6020 (JP); Flying Spark TI Ltd., 7608804 Rehovot (IL)
(72) Inventor: YAMAMORI, Akihiro, Kawasaki-shi, Kanagawa 212-0014 (JP); SHIMADA, Arisa, Osaka-shi, Osaka 554-8558 (JP)
(74) Representative: J A Kemp LLP
(86) International application number: PCT/JP2022/024705
(87) International publication number: WO 2022/270497

(57) **Abstract**

Provided is a technique for increasing the amount of a target fatty acid on the body surface of an aquatic animal.

A feed for aquatic animals, comprising a lipid containing 10 mass% or more of at least one fatty acid selected from the group consisting of palmitoleic acid and oleic acid as a lipid constituent fatty acid or a free fatty acid, the content of the lipid being 50 mass% or less.

## Description

### Technical Field

The present disclosure relates to a feed for aquatic animals and the like.

### Background Art

As the world's population grows, the demand for food production, such as in aquaculture and animal husbandry, increases, and further efficiency is required. For example, for the first time in human history, the catch of farmed fish is expected to exceed the catch of wild fish within two years. However, in aquaculture and animal husbandry, losses due to parasites have become a problem, especially in aquatic animals. For example, parasites that are parasitic on the body surface, such as sea lice and *hadamushi*, cause loss of appetite to slow down growth and transmit disease through wounds.

Chemical baths, such as a hydrogen peroxide bath, are generally used as a method to deal with parasites. However, they have disadvantages in that it is necessary to remove food before and after such a chemical bath, which slows down growth and in that it takes time and effort to prepare a chemical bath and to place fish in the chemical bath and take them out. Another method to deal with parasites is to feed an animal an anthelmintic; however, this method has the disadvantage of poor feeding.

### Citation List

### Patent Literature

PTL 1: JP2017-530944A

### Summary of Invention

### Technical Problem

Patent Literature (PTL) 1 discloses that by breeding salmon in a solution of palmitoleic acid as an allomone for a short period of time, the number of parasites on the body surface is reduced. This is believed to be because palmitoleic acid adheres to the body surface of salmon and then acts as an allomone, reducing the number of parasites on the body surface. In fact, the present inventor found that breeding fish in a solution of palmitoleic acid for a short period of time increases the amount of palmitoleic acid on the body surface of the fish.

However, the above technique requires preparation of a large amount of a fatty acid solution and thus is not effective in mariculture in which dilution and diffusion of the components occur. Feeding an aquatic animal a fatty acid, such as palmitoleic acid, may be considered; however, it is unclear whether the amount of the ingested fatty acid increases on the body surface of the aquatic animal.

An object of the present disclosure is to provide a technique for increasing the amount of a target fatty acid on the body surface of an aquatic animal.

### Solution to Problem

The present inventor conducted extensive research and found that the above object can be achieved by a feed for aquatic animals, comprising a lipid containing 10 mass% or more of at least one fatty acid selected from the group consisting of palmitoleic acid and oleic acid as a lipid constituent fatty acid or a free fatty acid, the content of the lipid being 50 mass% or less. The present inventor conducted further research based on this finding, and accomplished the present invention. Specifically, the present disclosure includes the following embodiments.

### Item 1.

A feed for aquatic animals, comprising a lipid containing 10 mass% or more of at least one fatty acid selected from the group consisting of palmitoleic acid and oleic acid as a lipid constituent fatty acid or a free fatty acid, the content of the lipid being 50 mass% or less.

### Item 2.

The feed for aquatic animals according to Item 1, wherein the content of the fatty acid in the lipid is 15 to 80 mass%.

### Item 3.

The feed for aquatic animals according to Item 1 or 2, wherein the content of the lipid is 2 to 30 mass%.

### Item 4.

The feed for aquatic animals according to any one of Items 1 to 3, comprising an insect material and/or a plant-derived material.

### Item 5.

The feed for aquatic animals according to Item 4, wherein the lipid is a lipid derived from the insect material and/or the plant-derived material.

### Item 6.

The feed for aquatic animals according to any one of Items 1 to 5, comprising an insect material.

### Item 7.

The feed for aquatic animals according to any one of Items 4 to 6, wherein the insect material is a material derived from an insect belonging to Diptera.

### Item 8.

The feed for aquatic animals according to any one of Items 4 to 7, wherein the insect material is at least one member selected from the group consisting of insect extracts and insect homogenates.

### Item 9.

The feed for aquatic animals according to any one of Items 4 to 8, wherein the insect material is a material derived from at least one member selected from the group consisting of eggs, larvae, prepupae, pupae, and adult insects.

### Item 10.

The feed for aquatic animals according to any one of Items 1 to 9, wherein the fatty acid comprises palmitoleic acid.

### Item 11.

The feed for aquatic animals according to any one of Items 1 to 10, which is for fish.

### Item 12.

The feed for aquatic animals according to any one of Items 1 to 11, which is for use in increasing the amount of the fatty acid on a body surface of an aquatic animal.

### Item 13.

The feed for aquatic animals according to any one of Items 1 to 12, which is for use in parasite inhibition in an aquatic animal.

### Item 14.

A method for producing an aquatic animal, comprising feeding the aquatic animal the feed for aquatic animals according to any one of Items 1 to 13.

### Item 15.

Use of a composition that comprises a lipid containing 10 mass% or more of at least one fatty acid selected from the group consisting of palmitoleic acid and oleic acid as a lipid constituent fatty acid or a free fatty acid, the content of the lipid being 50 mass% or less, for a feed for aquatic animals.

### Item 16.

Use of a feed for aquatic animals that comprises a lipid containing 10 mass% or more of at least one fatty acid selected from the group consisting of palmitoleic acid and oleic acid as a lipid constituent fatty acid or a free fatty acid, the content of the lipid being 50 mass% or less, for increasing the amount of the fatty acid on a body surface of an aquatic animal.

### Item 17.

Use of a feed for aquatic animals that comprises a lipid containing 10 mass% or more of at least one fatty acid selected from the group consisting of palmitoleic acid and oleic acid as a lipid constituent fatty acid or a free fatty acid, the content of the lipid being 50 mass% or less, for parasite inhibition in an aquatic animal.

### Item 18.

Use of a composition that comprises a lipid containing 10 mass% or more of at least one fatty acid selected from the group consisting of palmitoleic acid and oleic acid as a lipid constituent fatty acid or a free fatty acid, the content of the lipid being 50 mass% or less, for producing a feed for aquatic animals.

### Item 19.

Use of a composition that comprises a lipid containing 10 mass% or more of at least one fatty acid selected from the group consisting of palmitoleic acid and oleic acid as a lipid constituent fatty acid or a free fatty acid, the content of the lipid being 50 mass% or less, for producing a feed for aquatic animals for use in increasing the amount of the fatty acid on a body surface of an aquatic animal.

### Item 20.

Use of a composition that comprises a lipid containing 10 mass% or more of at least one fatty acid selected from the group consisting of palmitoleic acid and oleic acid as a lipid constituent fatty acid or a free fatty acid, the content of the lipid being 50 mass% or less, for producing a feed for aquatic animals for use in parasite inhibition in an aquatic animal.

### Item 21.

A method for increasing the amount of fatty acid on a body surface of an aquatic animal, comprising feeding the aquatic animal the feed for aquatic animals according to any one of Items 1 to 13.

### Item 22.

A method for inhibiting a parasite in an aquatic animal, comprising feeding the aquatic animal the feed for aquatic animals according to any one of Items 1 to 13.

### Advantageous Effects of Invention

The present disclosure provides a feed for aquatic animals, comprising a lipid containing 10 mass% or more of at least one fatty acid selected from the group consisting of palmitoleic acid and oleic acid as a lipid constituent fatty acid or a free fatty acid, the content of the lipid being 50 mass% or less. This makes it possible to increase the amount of a target fatty acid on the body surface of an aquatic animal. This also makes it possible to inhibit parasitic infestation of an aquatic animal.

### Brief Description of Drawings

Fig. 1 shows photographs of fish gathering during feeding in Test Example 1. The photograph on the left shows test group 1 and the photograph on the right shows test group 2.
Fig. 2 shows the results of measurement of a palmitoleic acid reagent alone by using Dart-MS in Test Example 1.
Fig. 3 shows the results of measurement of substances on the surface of fish in Test Example 1. The vertical axis indicates the peak ratio of the maximum intensity of m/z 255.002 to 255.998 derived from palmitoleic acid to the maximum intensity of m/z 303.008 to 303.995 derived from eicosapentaenoic acid (EPA). On the horizontal axis, "Regular Feed" represents test group 1 and "10% Oil-containing Feed" represents test group 2.
Fig. 4 shows the results of measurement of substances on the surface of fish in Test Example 1 and Comparative Test Example 1. The vertical axis indicates the peak ratio of the maximum intensity of m/z 255.002 to 255.998 derived from palmitoleic acid to the maximum intensity of m/z 303.008 to 303.995 derived from eicosapentaenoic acid (EPA). On the horizontal axis, "Regular Feed" represents test group 1 in Test Example 1, "10% Oil-containing Feed" represents test group 2 in Test Example 1, and "10 ppm PT Chemical Bath" represents the test group in Comparative Test Example 1.
Fig. 5 shows the results of measurement of substances on the surface of fish in Test Example 2. The vertical axis indicates the peak ratio of the maximum intensity of m/z 255.002 to 255.998 derived from palmitoleic acid to the maximum intensity of m/z 303.008 to 303.995 derived from eicosapentaenoic acid (EPA). On the horizontal axis, "Regular Feed" represents test group 1, and "10% Oil-containing Feed" represents test group 2.
Fig. 6 shows the results of measurement of substances on the surface of fish in Test Example 3. The vertical axis indicates the concentration of palmitoleic acid per area of the fish body surface.
Fig. 7 shows the results of measurement of the number of parasitic *hadamushi* in Test Example 4. The vertical axis indicates the number of parasitic *hadamushi* per greater amberjack.

### Description of Embodiments

In the present specification, the terms "comprise" and "contain" include the concepts of comprising, containing, consisting essentially of, and consisting of.

In the present specification, the phrase "and/or" includes both "and" and "or." Specifically, "A and/or B" includes the concepts of A alone, B alone, and the combination of A and B.

### 1. Feed for Aquatic Animals

The present disclosure provides as one embodiment a feed for aquatic animals (also referred to herein as "the feed of the present disclosure"), comprising a lipid (also referred to herein as "the lipid of the present disclosure") containing 10 mass% or more of at least one fatty acid selected from the group consisting of palmitoleic acid and oleic acid (also referred to herein as "the fatty acid of the present disclosure") as a lipid constituent fatty acid or a free fatty acid, the content of the lipid being 50 mass% or less. This is described below.

Palmitoleic acid is an unsaturated fatty acid having the following chemical formula: CH₃(CH₂)₅CH=CH(CH₂)₇COOH.

Oleic acid is an unsaturated fatty acid having the following chemical formula: CH₃(CH₂)₇CH=CH(CH₂)₇COOH.

The lipid of the present disclosure contains at least one fatty acid selected from the group consisting of palmitoleic acid and oleic acid. The state of the fatty acid is not particularly limited, and the fatty acid may be either a lipid constituent fatty acid (for example, a fatty acid that constitutes triglyceride) or a free fatty acid.

The content of the fatty acid of the present disclosure (regardless of the state of the fatty acid) in the lipid of the present disclosure is 10 mass% or more. This allows for an increase in the amount of the target fatty acid (the fatty acid of the present disclosure (at least one fatty acid selected from the group consisting of palmitoleic acid and oleic acid) contained in the lipid of the present disclosure) to a certain level or more on the body surface of an aquatic animal.

The content of the fatty acid of the present disclosure in the lipid of the present disclosure is preferably 15 mass% or more, more preferably 20 mass% or more, and even more preferably 24 mass% or more. The upper limit of the content of the fatty acid of the present disclosure in the lipid of the present disclosure is not particularly limited, and is, for example, 90 mass%, 80 mass%, 70 mass%, 60 mass%, or 50 mass%. The content of the fatty acid of the present disclosure in the lipid of the present disclosure is preferably within the range of 10 to 90 mass%, more preferably 15 to 80 mass%, and even more preferably 20 to 70 mass%.

It is preferred that the fatty acid of the present disclosure comprises palmitoleic acid, and it is more preferred that the fatty acid of the present disclosure comprises palmitoleic acid and oleic acid.

When the lipid of the present disclosure contains palmitoleic acid, the content of palmitoleic acid in the lipid of the present disclosure is preferably 10 mass% or more, more preferably 15 mass% or more, even more preferably 20 mass% or more, and still even more preferably 24 mass% or more. When the lipid of the present disclosure contains palmitoleic acid, the upper limit of the content of palmitoleic acid in the lipid of the present disclosure is not particularly limited, and is, for example, 70 mass%, 60 mass%, 50 mass%, 40 mass%, or 30 mass%. When the lipid of the present disclosure contains palmitoleic acid, the content of palmitoleic acid in the lipid of the present disclosure is preferably within the range of 10 to 60 mass%, more preferably 15 to 50 mass%, even more preferably 20 to 40 mass%, and still even more preferably 20 to 30 mass%.

When the lipid of the present disclosure contains oleic acid, the content of oleic acid in the lipid of the present disclosure is preferably 5 mass% or more, more preferably 10 mass% or more, even more preferably 15 mass% or more, and still even more preferably 17 mass% or more. When the lipid of the present disclosure contains oleic acid, the upper limit of the content of oleic acid in the lipid of the present disclosure is not particularly limited, and is, for example, 80 mass%, 60 mass%, 40 mass%, 30 mass%, or 25 mass%. When the lipid of the present disclosure contains oleic acid, the content of oleic acid in the lipid of the present disclosure is preferably within the range of 5 to 80 mass%, more preferably 10 to 60 mass%, even more preferably 15 to 40 mass%, and still even more preferably 15 to 30 mass%.

The content of the lipid of the present disclosure in the feed of the present disclosure is 50 mass% or less. This allows for an increase in the amount of the target fatty acid (the fatty acid of the present disclosure (at least one fatty acid selected from the group consisting of palmitoleic acid and oleic acid) contained in the lipid of the present disclosure) to a certain level or more on the body surface of an aquatic animal while reducing nutritional imbalance as a feed for aquatic animals (e.g., while ensuring a certain content or more of protein).

The content of the lipid of the present disclosure in the feed of the present disclosure is preferably 1 mass% or more, more preferably 2 mass% or more, even more preferably 3 mass% or more, still even more preferably 5 mass% or more, particularly preferably 7 mass% or more, and particularly more preferably 8 mass% or more, from the viewpoint of increasing the amount of the target fatty acid. The content of the lipid of the present disclosure in the feed of the present disclosure is preferably 40 mass% or less, more preferably 30 mass% or less, even more preferably 20 mass% or less, and still even more preferably 15 mass% or less, from the viewpoint of reducing nutritional imbalance as a feed for aquatic animals.

It is preferred that the feed of the present disclosure comprises an insect material and/or a plant-derived material, and it is more preferred that the feed of the present disclosure comprises an insect material. In this case, in a preferred embodiment, the lipid of the present disclosure is a lipid derived from an insect material and/or a plant-derived material, in other words, the lipid of the present disclosure is a lipid contained in an insect material and/or a plant-derived material. When the lipid of the present disclosure is a lipid derived from an insect material and/or a plant-derived material, the feed of the present disclosure may comprise a lipid other than the lipid of the present disclosure (i.e., a lipid that is not derived from an insect material and/or a plant-derived material). In this case, the content of the other lipid in the feed of the present disclosure is, for example, 0 to 15 mass%, 0 to 10 mass%, or 0 to 5 mass%.

The insect material is not particularly limited as long as it is an insect-derived material, i.e., a material prepared from an insect and containing substances, components, etc. that constitute the body of an insect.

The kind of insect is not particularly limited. Examples of insects include insects belonging to Diptera. Examples of insects belonging to Diptera include insects belonging to Brachycera, insects belonging to Nematocera, and the like; and are preferably insects belonging to Brachycera. Examples of insects belonging to Brachycera include insects belonging to Muscomorpha, insects belonging to Stratiomyomorpha, insects belonging to Tabanomorpha, insects belonging to Asilomorpha, insects belonging to Empidomorpha, and the like; and are preferably insects belonging to Muscomorpha, insects belonging to Stratiomyomorpha, and the like. Specific examples of insects belonging to Brachycera include insects belonging to Tephritidae, insects belonging to Muscidae, insects belonging to Stratiomyidae, insects belonging to Sarcophagidae, and the like; and are preferably insects belonging to Tephritidae, insects belonging to Muscidae, insects belonging to Stratiomyidae, and the like, more preferably insects belonging to Tephritidae, even more preferably insects belonging to Ceratitis, and particularly preferably Ceratitis capitate.

Usable insects are insects at any growth stage. Examples of insects include eggs, larvae, prepupae, pupae, and adult insects. These can be used entirely or partially.

Specific examples of insect materials include insect extracts, insect homogenates, and the like. Of these, for example, insect extracts are preferable, and for example, insect lipid extracts are more preferable. In one embodiment, when an insect lipid extract is used, the lipid of the present disclosure is an insect lipid extract. The insect material may be one containing an insect body fluid and/or extraction solvent (a wet material), or one obtained by removing the insect body fluid and/or extraction solvent (a dry material). Regarding the properties, the wet material is, for example, in the form of a liquid, a paste, or the like; and the dry material is, for example, in the form of a powder, particles, amorphous particles, or the like. Specific examples of forms of the insect material include concentrated solids, fat solids, reduced-fat solids, and the like.

Such insect materials can be used singly or in a combination of two or more.

Methods for producing an insect material are common and would be apparent to one of ordinary skill in the art. An example of such a method for producing an insect material includes wet grinding of at least one whole insect, at least one whole adult insect, or at least one whole live insect into an insect slurry; and drying the insect slurry to form a dried insect material comprising solid insect matter particles. The drying may include spray drying or drum drying. As used herein, "insect slurry" is a semiliquid mixture of ground non-dewatered insects with or without added liquid. The semiliquid mixture includes a predetermined ratio of insects (mass) to added liquid (mass), such as water. For example, an insect slurry includes a 1:2 weight ratio of insects to water (e.g., 200 pounds (approx. 90.7 kg) of insects and 400 pounds (approx. 181.4 kg) of water). The step of drying may include heat drying, spray drying, freeze drying, tray drying, paddle drying, fluid bed drying, flash drying, air drying, vacuum drying, drum drying, or a combination thereof. Dryers, such as ovens, impingement ovens, freeze dryers, heat dryers, or hot air or vacuum dryers may be used. Spray drying is used to dry the insect slurry into a dried insect material. Drum drying is used to dry the insect slurry into a dried insect material. As used herein, "dried insect material" refers to an insect material (e.g., powder, flakes, meal) comprising water in an amount of about 15% by weight or less of the dried insect material. For example, the dried insect material comprises water in an amount of less than about 10% by weight.

Methods for obtaining whole insect powder or reduced-fat insect powder would be apparent to one of ordinary skill in the art. These methods can include non-limiting steps, such as blanching, wet grinding, oil separation, and drying to obtain reduced-fat insect powder; or blanching, drying, and grinding to obtain whole insect powder. More specifically, for example, after blanching, wet grinding, and oil separation (e.g., oil separation by centrifugation), the resulting lipid (if oil separation by centrifugation, then the centrifugation supernatant) can be heated, as necessary, and filtered and purified to obtain an insect lipid extract, when obtaining an insect lipid extract.

The advantages of wet grinding include, for example, the following:
(1) reducing the heat needed to preserve and dry the insect slurry;
(2) minimizing/avoiding the negative effects heat has on the insect material properties;
(3) increasing process efficiency;
(4) improving product digestibility; and
(5) improving process throughputs.

The wet-grinding process may be performed using any one of, or a combination of, the following devices: grinders, mills, stone mills, mixers, peanut grinders, peanut butter grinders, colloid mills, pin mills, bead mills, dispersers, homogenizers, choppers, rotor stator devices, hammer mills, press grinders, mashers, macerators, food processors, rollers, or juicers. Examples of grinders include, but are not limited to, an Olde Tyme Peanut Mill, Olde Tyme Peanut Grinder, Olde Tyme Peanut Butter Grinder, Olde Tyme Peanut Butter Mill, Olde Style Peanut Mill, Olde Style Peanut Grinder, Olde Style Peanut Butter Mill, IKA Mixer, IKA Colloid Mill, Jack LaLanne Power Juicer, and Acme 6001 Centrifugal Juicer.

When the feed of the present disclosure comprises an insect material, the content of the insect material in the feed of the present disclosure is not particularly limited. For example, the content of the insect material is 1 to 50 mass%, preferably 2 to 40 mass%, more preferably 5 to 30 mass%, and even more preferably 7 to 20 mass%. In some embodiments, the content of the insect material is, for example, within a range in which the lower limit is any one of the following values, or the upper limit and the lower limit are any two of the following values: 0.1 mass%, 0.2 mass%, 0.5 mass%, 0.8 mass%, 1 mass%, 2 mass%, 3 mass%, 5 mass%, 7 mass%, 8 mass%, 10 mass%, 12 mass%, 15 mass%, 18 mass%, 20 mass%, 22 mass%, 25 mass%, 28 mass%, 30 mass%, 32 mass%, 35 mass%, 40 mass%, and 50 mass%.

The plant-derived material is not particularly limited as long as it is a material derived from a plant, i.e., a material prepared from a plant and containing substances, components, etc. that constitute the plant. Vegetable oils and fats are preferable as plant-derived materials since they are suitable for use as materials added to feeds for aquatic animals. Examples of vegetable oils and fats include coconut oil, sesame oil, rapeseed oil, high-oleic rapeseed oil, soybean oil, palm oil, cottonseed oil, corn oil, sunflower oil, high-oleic sunflower oil, sunflower oil, olive oil, linseed oil, rice-bran oil, camellia oil, perilla oil, grapeseed oil, peanut oil, almond oil, avocado oil, cacao butter, vegetable oil, canola oil, and the like.

When the feed of the present disclosure comprises a plant-derived material, the content of the plant-derived material in the feed of the present disclosure is not particularly limited. The content of the plant-derived material is, for example, 1 to 50 mass%, preferably 2 to 40 mass%, more preferably 5 to 30 mass%, and even more preferably 7 to 20 mass%. In some embodiments, the content of the plant-derived material is, for example, within a range in which the lower limit is any one of the following values, or the upper limit and the lower limit are any two of the following values: 0.1 mass%, 0.2 mass%, 0.5 mass%, 0.8 mass%, 1 mass%, 2 mass%, 3 mass%, 5 mass%, 7 mass%, 8 mass%, 10 mass%, 12 mass%, 15 mass%, 18 mass%, 20 mass%, 22 mass%, 25 mass%, 28 mass%, 30 mass%, 32 mass%, 35 mass%, 40 mass%, and 50 mass%.

The feed of the present disclosure can contain materials that are blended in feeds for aquatic animals, as necessary.

The feed of the present disclosure preferably comprises a fish meal and/or a fish-meal-alternative material.

The fish meal is not particularly limited, and fish meal obtained from various kinds of raw-material fish can be used. Examples of raw-material fish include sardine, Alaska pollack (*Theragra chalcogramma*), saury, herring, catfish, bluegill, black bass, silver carp (*Hypophthalmichthys molitrix*), and the like. The fish meal can be obtained, for example, by heat-treating the raw material, and then drying and crushing the material. Such fish meal can be used singly or in a combination of two or more.

When the feed of the present disclosure contains fish meal, the content of the fish meal in the feed of the present disclosure is not particularly limited. For example, the content of the fish meal is 0.1 to 50 mass%, preferably 0.2 to 50 mass%, more preferably 0.5 to 50 mass%, and even more preferably 0.8 to 25 mass%. In some embodiments, the content of the fish meal is, for example, within a range in which the lower limit is any one of the following values, or the upper limit and the lower limit are any two of the following values: 0.1 mass%, 0.2 mass%, 0.5 mass%, 0.8 mass%, 1 mass%, 2 mass%, 5 mass%, 8 mass%, 10 mass%, 12 mass%, 15 mass%, 18 mass%, 20 mass%, 22 mass%, 25 mass%, 28 mass%, 30 mass%, 32 mass%, 35 mass%, 40 mass%, and 50 mass%.

The fish meal alternative is not particularly limited. For example, protein-containing raw materials obtained from organisms other than fish (plants or animals) can be used. Specific examples of fish meal alternatives include plant feed ingredients, such as soybean meal, soy protein concentrate, corn gluten meal, distiller's dried grains with solubles, and rapeseed oil meal; animal feed ingredients, such as meat meal, meat bone meal, feather meal, and blood meal; microalgae ingredients; and single-cell-organism raw materials, such as yeast and bacteria. Such fish meal alternatives can be used singly or in a combination of two or more.

When the feed of the present disclosure contains a fish meal alternative, the content of the fish meal alternative in the feed of the present disclosure is not particularly limited. For example, the content of the fish meal alternative is 0.1 to 50 mass%, preferably 0.2 to 50 mass%, more preferably 0.5 to 50 mass%, and even more preferably 0.8 to 25 mass%. In some embodiments, the content of the fish meal alternative is, for example, within a range in which the lower limit is any one of the following values, or the upper limit and the lower limit are any two of the following values: 0.1 mass%, 0.2 mass%, 0.5 mass%, 0.8 mass%, 1 mass%, 2 mass%, 5 mass%, 8 mass%, 10 mass%, 12 mass%, 15 mass%, 18 mass%, 20 mass%, 22 mass%, 25 mass%, 28 mass%, 30 mass%, 32 mass%, 35 mass%, 40 mass%, and 50 mass%.

The feed of the present disclosure may contain other ingredients in addition to the above ingredients, if necessary. Examples of such other ingredients include binders (e.g., sodium carboxymethylcellulose (CMC), guar gum, sodium alginate, sodium polyacrylate, casein sodium, propylene glycol), cereal powders (e.g., wheat flour, starch), minerals, vitamins (e.g., vitamin C, vitamin B1, vitamin A, vitamin D, vitamin E), amino acids (e.g., lysine, methionine, histidine), pigments (e.g., β-carotene, astaxanthin, canthaxanthin), liver oils (e.g., cod liver oil), and the like.

When the feed of the present disclosure contains other ingredients, the content of other ingredients in the feed of the present disclosure is not particularly limited. For example, the content of other ingredients is 0.01 to 30 mass%.

The form of the feed of the present disclosure is not particularly limited as long as it can be ingested by the target aquatic animal. That is, the feed of the present disclosure may be in any form, such as a powder, granules, crumbles, pellets, cubes, a paste, or a liquid. For example, the feed of the present disclosure may be formed into pellets, such as dry pellets or moist pellets. The form of the feed of the present disclosure can be appropriately selected according to various conditions, such as the type and growth stage of the target aquatic animal. For example, for fry, feed in the form of a powder or crumbles can be usually preferably used. For adult fish, dry pellets can be usually preferably used.

The target aquatic animal of the feed of the present disclosure is not particularly limited as long as the animal can live in water. Examples of aquatic animals include fish, crustaceans, shellfish, and the like. Among these, fish are preferable. Specific examples of fish include red seabream (*Pagrus major*), carp, trout, yellowtail (*Seriola quinqueradiata*), young yellowtail, greater amberjack (*Seriola dumerili*), yellowtail amberjack (*Seriola lalandi*), tuna, puffer fish, bastard halibut (*Paralichthys olivaceus*), horse mackerel, mackerel, grouper, *Epinephelus bruneus*, salmon, eel, catfish (*Silurus asotus*), *Plecoglossus altivelis*, char (*Salvelinus pluvius*), eel, carp, sea bass, crucian carp, trout, *Oncorhynchus masou,* lake smelt (*Hypomesus nipponensis*), goldfish, killifish (*Oryzias latipes*), tilapia (*Oreochromis niloticus*), sturgeon, zebrafish (*Danio rerio*), and the like. Examples of crustaceans include shrimps (prawns) and crabs. Specific examples of crustaceans include vannamei shrimp (*Litopenaeus vannamei*), Japanese tiger prawn (*Marsupenaeus japonicus*), black tiger prawn (*Penaeus monodon*), whiteleg shrimp (*Litopenaeus vannamei*), and swimming crab (*Portunus trituberculatus*)*.*

The feed of the present disclosure is preferably a feed for use in increasing the amount of the fatty acid of the present disclosure on the body surface of an aquatic animal.

The feed of the present disclosure is preferably a feed for use in parasite inhibition in an aquatic animal. Parasite inhibition specifically means, for example, suppressing parasitic infestation on the body surface of aquatic animals. Parasite inhibition includes not only preventing parasitic infestation, but also making parasites that are already parasitic fall off. The parasites are not particularly limited as long as they are organisms that are known to be parasitic on aquatic animals or can be parasitic on aquatic animals. Examples include monogeneans (commonly referred to as *"hadamushi"* or *"eramushi"*) belonging to the class Monogenea of the phylum Platyhelminthes of fish, Caligus belonging to the class Crustacea of the phylum Arthropoda, and the like. Examples of parasites referred to as *"hadamushi"* include monogeneans of the subfamily Benedeniinae and the like that are parasitic on saltwater fish. Examples of the subfamily Benedeniinae include Benedenia, such as Benedenia seriolae, Benedenia epinepheli, Benedenia hoshinai, and Benedenia sekii, and Neobenedenia, such as Neobenedenia girellae and Neobenedenia congeri. Examples of monogeneans referred to as *"eramushi"* include those belonging to Polyopisthocotylea, such as Heteraxine heterocerca of the family Heteraxinidae, Zeuxapta japonica, Bivagina tai of the family Microcotylidae, Microcotyle sebastis, Microcotyle sebastisci, Heterobothrium okamotoi of the family Diclidophoridae, Neoheterobothrium hirame, and the like. Some parasites referred to as *"eramushi"* are classified as Monopisthocotylea, such as Lamellodiscus spp. Examples of Caligus include those belonging to the family Caligidae, such as Caligus longipedis, Pseudocaligus fugu, Caligus orientalis, and the like.

Direct analysis in real time mass spectrometry (Dart-MS), which can directly measure complex samples, such as human sebum, can be used to measure small amounts of fatty acids, and oils and fats on the body surface of aquatic animals. However, if the absolute value of the measured intensity is less than 500, such measurement results are excluded because they may be affected by error. The amount of the fatty acid of the present disclosure on the body surface of aquatic animals can be measured, specifically according to the method described in Test Example 1 described below.

### 2. Method for Producing Aquatic Animal

The present disclosure provides as one embodiment a method for producing an aquatic animal (specifically, for example, an aquatic animal product), the method comprising feeding an aquatic animal with the feed of the present disclosure (also referred to herein as "the production method of the present disclosure"). The following describes the method.

The feeding amount of the feed of the present disclosure is not particularly limited. The feeding amount of the feed of the present disclosure can be appropriately selected according to various conditions, such as the type of the target aquatic animal. The feeding amount of the feed of the present disclosure can be, for example, the amount of satiation. The feed of the present disclosure can be fed once a day, or two or more times a day in divided portions. Alternatively, the feed of the present disclosure can be fed once every several days. The feeding amount of the feed of the present disclosure in each feeding may or may not be constant.

The period of feeding of the feed of the present disclosure is not particularly limited, and can be appropriately selected according to various conditions, such as the type of the target aquatic animal. The feed of the present disclosure can be continuously fed over the entire period of cultivation (breeding), or may be fed only in some limited period of cultivation (breeding). The term "some limited period" may refer to, for example, a period of 10% or more, 20% or more, 30% or more, 50% or more, 70% or more, or 90% or more of the entire period of cultivation (breeding). The period of feeding of the feed of the present invention can be, for example, 3 days or longer, 1 week or longer, 2 weeks or longer, 3 weeks or longer, 4 weeks or longer, 2 months or longer, or 3 months or longer; can be 1 year or shorter, 6 months or shorter, 4 months or shorter, 3 months or shorter, 2 months or shorter, 4 weeks or shorter, or 3 weeks or shorter; or can be any possible combination of these ranges. Continuous feeding and interruption of feeding of the feed of the present disclosure at any intervals may be repeated for any period.

Cultivation (breeding) of the aquatic animal can be performed in the same manner as usual methods for cultivating (breeding) an aquatic animal, except that the feed of the present disclosure is fed. Cultivation (breeding) can be performed, for example, in a fish pen in the sea or a fish tank on land. The term "cultivation" includes both propagation cultivation, in which only seed organisms are produced (fry production etc.), and cultivation in which juvenile fish are grown into adult fish (e.g., parent fish).

### Examples

The present invention is explained in detail with reference to Examples; however, the present invention is not limited to these Examples.

### Production Example 1

An insect lipid extract was produced in the following manner. Larvae of *Ceratitis capitate* were washed and blanched at 92°C for 6 minutes and then crushed in a stone mill. The obtained composition was centrifuged at 2000 to 6000 rpm with a centrifuge separator (trade name: V-02, manufactured by CINC Industries), and the supernatant was collected. After the coarse particles of the supernatant were removed with an oil filter, the obtained roughly refined solution was heated in a water bath at 90°C and then purified through a filter of 150-mm mesh size to obtain an insect lipid extract.

The content of the fatty acid (as a lipid constituent fatty acid or a free fatty acid) in the obtained insect lipid extract was measured by gas chromatography. The results were the following: the palmitoleic acid content in the insect lipid extract was 25 mass%, and the oleic acid content was 21 mass%.

### Test Example 1

The following test feed was prepared: commercial feed (manufactured by Feed One Co., Ltd., Crumble 2C for carp, crude fat: 3% or more) and feed B prepared by adding the insect lipid extract (Production Example 1) to the commercial feed to result in 10 mass% (commercial feed:insect lipid extract = 9:1). Carp (*Cyprinus carpio*) weighing 0.81 g on average were kept in 13-L water tanks with 10 carp for each tank. Two tanks were set up, one tank for test group 1 (test feed: commercial diet) and the other tank for test group 2 (test feed: feed B). The rearing temperature was 22 ± 1°C. Each type of test feed was fed once daily in an amount of 4% of the fish weight. The rearing method was a running water system with a water change rate of about 9 times/day at about 80 mL/min (i.e., 115 L/day).

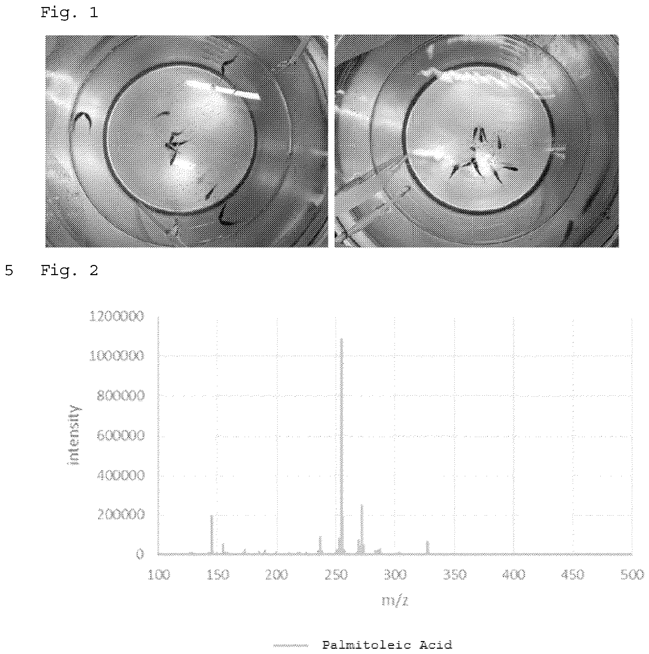

Before fish acclimation (7 fish only) and after 7 days of rearing, the average fish weight and survival rate were measured. Tables 1 and 2 show the results. How fish gathered at the time of feeding was confirmed, and the feed intake was evaluated. Fig. 1 shows photographs of the fish gathering during feeding.

**Table 1**

| Body Weight and Entire Length before Acclimation | | | | | | | | | | | | | | |
|---|---|---|---|---|---|---|---|---|---|---|---|---|---|---|
| Organism No. | 1 | 2 | 3 | 4 | 5 | 6 | 7 | | | | Average | SD | Max | Min |
| Body Weight (g) | 0.75 | 0.73 | 0.99 | 0.88 | 0.72 | 0.86 | 0.77 | | | | 0.81 | 0.1 | 0.99 | 0.72 |
| Entire Length (mm) | 36 | 35 | 39 | 38 | 34 | 35 | 33 | | | | 36 | 2 | 39 | 33 |

**Table 2**

| Body Weight and Entire Length after 7 Days of Feed Intake | | | | | | | | | | | | | | | |
|---|---|---|---|---|---|---|---|---|---|---|---|---|---|---|---|
| Organism No. | | 1 | 2 | 3 | 4 | 5 | 6 | 7 | 8 | 9 | 10 | Average | SD | Max | Min |
| Test Group 1 | Body Weight (g) | 1.17 | 0.99 | 0.98 | 1.06 | 0.92 | 0.82 | 0.75 | 0.77 | 0.92 | 0.71 | 0.91 | 0.15 | 1.17 | 0.71 |
| | Entire Length (mm) | 40 | 38 | 39 | 40 | 39 | 37 | 36 | 36 | 37 | 35 | 38 | 2 | 40 | 35 |
| Test Group 2 | Body Weight (g) | 0.98 | 1.08 | 0.93 | 0.97 | 0.72 | 0.86 | 0.75 | 0.9 | 0.82 | 0.71 | 0.87 | 0.12 | 1.08 | 0.71 |
| | Entire Length (mm) | 41 | 39 | 39 | 40 | 37 | 37 | 37 | 36 | 38 | 37 | 38 | 2 | 41 | 36 |

The survival rates were similar among the fish of test group 2 as compared with those of test group 1. In test group 2, fish were observed gathering around the feed, whereas in test group 1, three fish were observed wandering around the bucket without coming around the feed. The addition of fat and oil resulted in a relatively low protein content in the feed and led to a slightly lower average body weight of fish than that of fish that were given the feed free of fat and oil.

After 7 days of rearing, the fish were placed in a deep freezer, frozen for 1 day, and then thawed in a laboratory. The surface of the fish was scraped with a glass capillary, and the substances on the surface were measured using Dart-MS (AccuTOF 4G LC-plus, JEOL Ltd.) with the glass rod held over the device. As a reference example, palmitoleic acid (purity: ≥98.5%, Sigma-Aldrich) was also placed on a glass capillary and measured.

Fig. 2 shows the measurement results of palmitoleic acid (purity: ≥98.5%). Palmitoleic acid alone showed a major peak at m/z=255, with few major peaks around m/z 300. Thus, a t-test was conducted by comparing six samples on the regular diet and on the 10% oil-containing diet with the maximum intensity of m/z 255.002 to 255.998 derived from palmitoleic acid relative to the maximum intensity of m/z 303.008 to 303.995 derived from eicosapentaenoic acid (EPA) taken as a peak ratio.

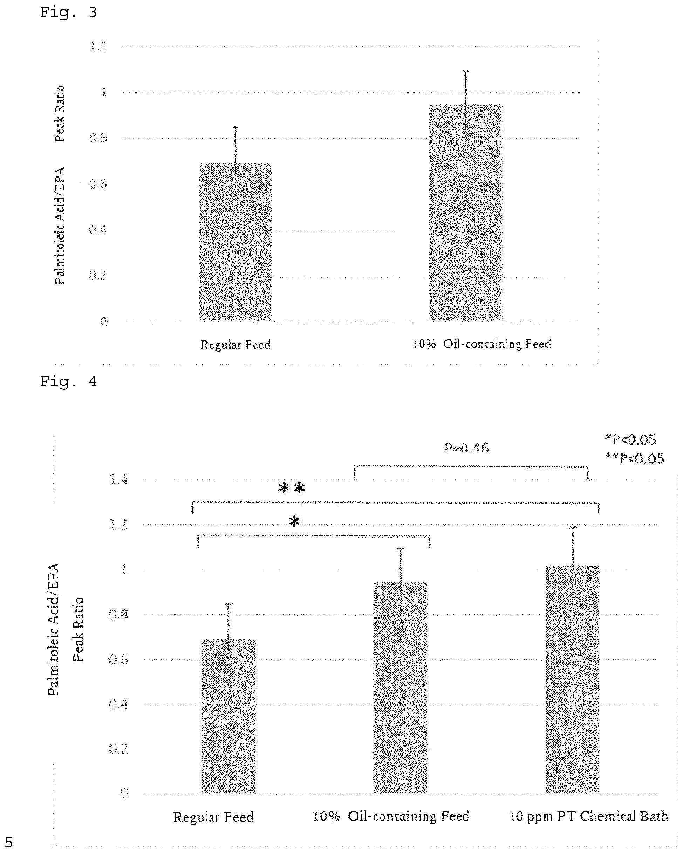

Fig. 3 shows the ratio of palmitoleic acid to EPA as the result of the measurement of substances on the surface of fish. Compared to the group on the regular diet, test group 2 showed a higher palmitoleic acid/EPA ratio, with a p value of 0.016, which was statistically high.

### Comparative Test Example 1

100 mg of palmitoleic acid was dissolved in 1 g of DMF. After dissolution, the palmitoleic acid was added to 10 L of water with a syringe (equivalent to 10 ppm of palmitoleic acid and 100 ppm of DMF), and thoroughly agitated, and kept at a rearing temperature of about 22°C, followed by aeration. Thereafter, ten carp with an average weight of 1 g were placed in the 10-L chemical bath and left for 1 hour. The ten carp were taken out, frozen in a deep freezer for 1 day, and thawed in a laboratory, followed by measuring the palmitoleic acid/EPA ratio on the surface of the fish in the same manner as in Test Example 1.

Fig. 4 shows the results combined with the results of Fig. 3. The 10-ppm palmitoleic acid chemical bath resulted in a significantly higher palmitoleic acid/EPA ratio than that of test group 1 in Test Example 1 and resulted in a palmitoleic acid/EPA ratio equivalent to that of test group 2 in Test Example 1.

### Test Example 2

The following test feed was prepared: commercial feed (Pier Gold No. 2, manufactured by Marubeni Nisshin Feed Co., Ltd.) and feed C prepared by adding 300 g of the insect lipid extract (Production Example 1) to 3 kg of the commercial feed. Greater amberjack fish (*kanpachi*), weighing 175 g, were given either commercial feed (test group 1) or feed C (test group 2) for 7 days. The feeding amount was 5%/day based on the fish weight. After 7 days of rearing, the fish were frozen in a deep freezer and then thawed in a laboratory. The surface of the fish was scraped with a glass capillary, and the substances on the surface were measured using Dart-MS (AccuTOF 4G LC-plus, JEOL Ltd.) with the glass rod held over the device.

Then, a t-test was conducted by comparing five samples on the regular diet and five samples on the 10% oil-containing diet with the maximum intensity of m/z 255.002 to 255.998 derived from palmitoleic acid relative to the maximum intensity of m/z 303.008 to 303.995 derived from eicosapentaenoic acid (EPA) taken as a peak ratio.

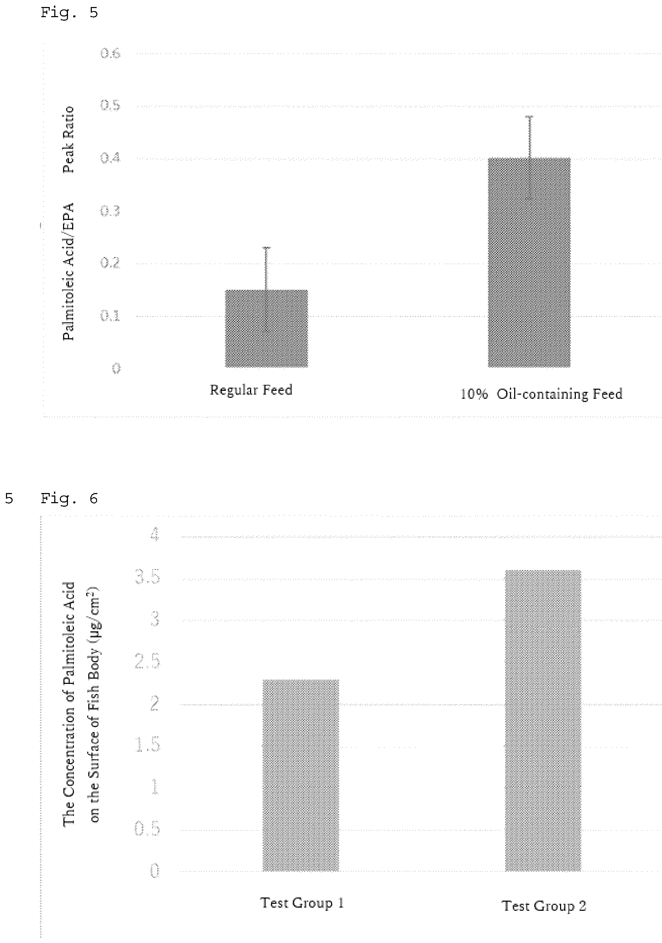

Fig. 5 shows the ratio of palmitoleic acid to EPA as the result of the measurement of substances on the surface of fish. Compared to the group on the regular diet, test group 2 showed a higher palmitoleic acid/EPA ratio, with a p value of 0.002, which was statistically high.

### Test Example 3

The following test feed was prepared: commercial feed (Pier Gold No. 2, manufactured by Marubeni Nisshin Feed Co., Ltd.) and feed C prepared by adding 300 g of the insect lipid extract (Production Example 1) to 3 kg of the commercial feed. Greater amberjack fish, weighing 175 g, were given either commercial feed (test group 1) or feed C (test group 2) for 7 days. The feeding amount was 5%/day based on the fish weight.

After 7 days of feeding, the greater amberjacks were frozen and then thawed in a laboratory. The surface of the fish was wiped with two dry absorbent cotton pads and two hot water-soaked absorbent cotton pads, and the fatty acid was extracted three times with 20 mL of acetonitrile. The samples were diluted with acetonitrile, filtered, and mixed with a derivatization reagent, followed by measuring the samples by HPLC-FL. From the concentration of palmitoleic acid in the extract, the concentration of palmitoleic acid per area of the fish body surface was calculated.

Fig. 6 shows the results. The concentration of palmitoleic acid was found to have increased in the body surface of the fish in test group 2 as compared with the fish in test group 1.

### Test Example 4

The following test feed was prepared: commercial feed (Pier Gold No. 2, manufactured by Marubeni Nisshin Feed Co., Ltd.) and feed C prepared by adding 300 g of the insect lipid extract (Production Example 1) to 3 kg of the commercial feed. Eleven greater amberjack fish, weighing 107 g on average, were given either commercial feed (test group 1) or feed C (test group 2) for 10 days. The feeding amount was 5%/day based on the fish weight of each group. After 10 days and 11 days from the start of feeding with each test feed, the greater amberjacks were immersed in a water tank containing hatched larvae of *hadamushi* (parasites) and exposed to the *hadamushi.* The greater amberjacks infected with *hadamushi* were returned to the rearing tanks and given regular feed for 1 week, after which the number of *hadamushi* was measured.

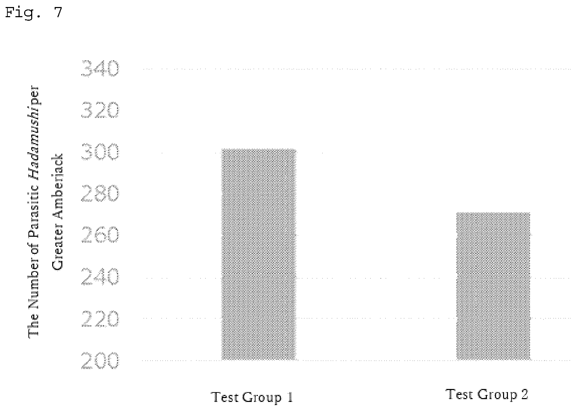

Fig. 7 shows the results. The number of parasitic *hadamushi* was lower in the fish that were given feed containing the insect lipid extract (test group 2) than in the control group (test group 1), indicating that the feed was effective in preventing parasites.

## Claims

1. A feed for aquatic animals, comprising a lipid containing 10 mass% or more of at least one fatty acid selected from the group consisting of palmitoleic acid and oleic acid as a lipid constituent fatty acid or a free fatty acid, the content of the lipid being 50 mass% or less.

2. The feed for aquatic animals according to claim 1, wherein the content of the fatty acid in the lipid is 15 to 80 mass%.

3. The feed for aquatic animals according to claim 1 or 2, wherein the content of the lipid is 2 to 30 mass%.

4. The feed for aquatic animals according to any one of claims 1 to 3, comprising an insect material and/or a plant-derived material.

5. The feed for aquatic animals according to claim 4, wherein the lipid is a lipid derived from the insect material and/or the plant-derived material.

6. The feed for aquatic animals according to any one of claims 1 to 5, comprising an insect material.

7. The feed for aquatic animals according to any one of claims 4 to 6, wherein the insect material is a material derived from an insect belonging to Diptera.

8. The feed for aquatic animals according to any one of claims 4 to 7, wherein the insect material is at least one member selected from the group consisting of insect extracts and insect homogenates.

9. The feed for aquatic animals according to any one of claims 4 to 8, wherein the insect material is a material derived from at least one member selected from the group consisting of eggs, larvae, prepupae, pupae, and adult insects.

10. The feed for aquatic animals according to any one of claims 1 to 9, wherein the fatty acid comprises palmitoleic acid.

11. The feed for aquatic animals according to any one of claims 1 to 10, which is for fish.

12. The feed for aquatic animals according to any one of claims 1 to 11, which is for use in increasing the amount of the fatty acid on a body surface of an aquatic animal.

13. The feed for aquatic animals according to any one of claims 1 to 12, which is for use in parasite inhibition in an aquatic animal.

14. A method for producing an aquatic animal, comprising feeding the aquatic animal the feed for aquatic animals according to any one of claims 1 to 13.
